Europäisches Patentamt

**European Patent Office**

Office européen des brevets

(19)

(11) Numéro de publication: **0 199 294 B1**

## FASCICULE DE BREVET EUROPEEN

(12)

(45) Date de publication de fascicule du brevet:
**05.06.91**

(51) Int. Cl.5. **H04B 17/02**

(21) Numéro de dépôt: **86105337.9**

(22) Date de dépôt: **17.04.86**

(54) **Procédé et dispositif de télésignalisation pour une liaison de transmission numérique bidirectionnnelle.**

(30) Priorité: **19.04.85 FR 8505979**

(43) Date de publication de la demande:
**29.10.86 Bulletin 86/44**

(45) Mention de la délivrance du brevet:
**05.06.91 Bulletin 91/23**

(84) Etats contractants désignés:
**BE DE FR GB IT LU NL SE**

(56) Documents cités:
**EP-A- 0 033 932**
**GB-A- 2 056 822**
**GB-A- 2 131 657**

(73) Titulaire: **ALCATEL CIT**
**33, rue Emeriau**
**F-75015 Paris(FR)**

(72) Inventeur: **Lacroix, Jean-Claude**
**11, Allée de la Vigne Dieu**
**F-91680 Bruyeres Le Chatel(FR)**
Inventeur: **Franco, Pierre**
**9, rue du Professeur Fleming**
**F-94260 Fresnes(FR)**
Inventeur: **Le Gall, Stéphane**
**49, rue Pasteur**
**F-92330 Sceaux(FR)**
Inventeur: **Bourret, Geràrd**
**1 et 3 Chemin de la Fosse aux Moines**
**F-91620 La Ville du Bois(FR)**
Inventeur: **Pochet, Jacques**
**18 rue des Glycines Le Plessis Pate**
**F-91220 Bretigny Sur Orge(FR)**

(74) Mandataire: **Weinmiller, Jürgen et al**
**Lennéstrasse 9 Postfach 24**
**W-8133 Feldafing(DE)**

## Description

La présente invention est relative à la télésurveillance d'équipements répartis le long d'une liaison de transmission numérique.

Pour répondre aux exigences de durée de vie et de fiabilité imposées aux liaisons de transmission à très longue portée, il est apparu nécessaire de prévoir, dans le cadre des systèmes à fibres optiques, une certaine redondance au niveau des diodes laser équipant les répéteurs. Cette redondance obtenue en équipant dès l'origine chaque répéteur avec plusieurs diodes laser de rechange mises en service une à une par un circuit de commutation implique l'existence d'une télécommande des circuits de commutation des répéteurs depuis des équipements terminaux de la ligne et d'une télésignalisation depuis chaque répéteur renseignant les équipements terminaux sur l'état des diodes laser en service.

On connaît, par le document US A - 4 281 416, une liaison numérique par fibre optique équipée d'une télécommande permettant de remplacer dans chaque répéteur la diode laser en service par une diode laser de réserve et d'une télésignalisation propre à chaque répéteur permettant de transmettre une alarme dès le franchissement d'un seuil par le courant de polarisation de la diode laser en service. Le signal de télécommande est constitué d'un message numérique qui est de même nature que le signal numérique transmis par la liaison et qui est inséré au milieu du trafic par le terminal télésurveillant. Ce message numérique répété plusieurs fois consécutivement pour éviter les fausses manoeuvres est formé d'une partie identifiant le répéteur concerné et d'une partie identifiant dans le répéteur concerné la diode laser à mettre en service. Le signal de télésignalisation est un motif formé d'une suite binaire pseudo-aléatoire dont la valeur initiale identifie le répéteur source.

Cette télésignalisation présente l'inconvénient de nécessiter dans chaque répéteur une source de suites pseudo-aléatoires fonctionnant au débit du signal numérique, c'est-à-dire, dans le cadre d'une transmission numérique par fibre optique, à un très grand débit uniquement réalisable en technologie ECL grande consommatrice d'énergie. Cela augmente de façon significative la consommation d'un répéteur et surtout sa dissipation thermique.

Elle a également l'inconvénient d'interrompre la liaison sur une durée suffisante pour provoquer une perte de synchronisation de la hiérarchie du train numérique et par conséquent de n'être adaptée qu'à la transmission d'alarmes majeures.

La présente invention a pour but d'éviter ces inconvénients et d'obtenir une télésignalisation à message momentanément substitué aux données du train numérique acheminé par la liaison qui nécessite un minimum de circuits très rapides au niveau des circuits élaborant le message et qui ne perturbe pas le train numérique ou son traitement en dehors des instants d'émission du message.

On connaît par ailleurs, par le document GB-A-2 056 822, un procédé de localisation, à partir d'un terminal d'une liaison bidirectionnelle, d'un élément défaillant de cette liaison, consistant à faire émettre par ce terminal un signal particulier dont la reconnaissance par un répéteur donné de cette liaison, dans le sens émission seulement, provoque son rebouclage en direction de ce terminal, ce qui fournit ainsi un moyen de localisation de l'élément défaillant.

La présente invention a pour objet un procédé de télésignalisation le long d'une liaison de transmission numérique bidirectionnelle reliant deux terminaux distants, à partir d'équipements répartis le long de la liaison et à destination de l'un des terminaux dit terminal traitant l'autre étant dit terminal relais, à l'aide de messages numériques de mêmes débits que les trains numériques acheminés par la liaison aux données desquels ils sont momentanément substitués, chaque message de télésignalisation étant formé de deux parties, une première partie dite de caractérisation envoyée en direction du terminal traitant, et une deuxième partie dite de localisation envoyée en direction du terminal relais qui émet en réponse à destination du terminal traitant un message d'acquittement reçu au terminal traitant avec un retard par rapport à la partie caractérisation du message de télésignalisation identifiant la position le long de la liaison de l'équipement émetteur du message de télésignalisation, et la partie de caractérisation d'un message de télésignalisation étant constituée de plusieurs configurations binaires commençant toutes par une séquence préfixe invariante et se poursuivant par une séquence suffixe particulière à chaque type de message, ledit procédé étant essentiellement caractérisé en ce que la partie de caractérisation d'un message de télésignalisation est constituée de l'une ou l'autre selon le type de message, de deux configurations binaires distinctes ayant une séquence préfixe obtenue par complémentation de la configuration binaire adoptée pour la partie de localisation d'un message de télésignalisation et une séquence suffixe identique à la séquence préfixe pour l'une des configurations et à la séquence préfixe complémentée pour l'autre des configurations.

La configuration binaire des parties de caractérisation et de localisation d'un message de télésignalisation n'a pas à coder un numéro d'identification de l'équipement émetteur mais seulement éventuellement les types de signalisation puisque la localisation de l'équipement émetteur se déduit du retard entre la réception de la partie de caractérisation du message de télésignalisation et la réception du message d'acquittement au terminal traitant. Le codage des types de signalisation n'exige que peu de variantes de configuration binaire qui, vu leur petit nombre, peuvent être choisies avec le seul souci de satisfaire au mieux au critère de non imitation par les trains numériques acheminés par la liaison et de facilité l'élaboration. En effet, les types de signalisation sont toujours en petit nombre, sans commune mesure avec le nombre possible d'équipements répartis, et peuvent être précodés par le sens de la liaison adoptée pour l'émission de la partie de caractérisation du message de télésignalisation, chaque terminal jouant le rôle de terminal traitant pour certains des types de signalisation et de terminal relais pour les autres.

La partie de localisation du message est avantageusement constituée d'une suite d'éléments binaires tous identiques en nombre légèrement supérieur à celui autorisé pour les trains numériques. En effet, le nombre d'éléments binaires successifs identiques est toujours limité dans un train numérique afin d'éviter de perturber la récupération de rythme. Mais cette limite établie en tenant compte des possibilités de répétition peut être dépassée sans inconvénient pour des messages isolés tels que les messages de télésignalisation. Bien entendu, dans le cas où il n'y a qu'un seul type de signalisation à identifier, ces séquences suivantes sont inutiles.

La partie de caractérisation du message est quant à elle avantageusement constituée de séquences successives d'éléments binaires, la première dite préfixe étant tirée par complémentation de la suite d'éléments binaires identiques définissant la partie de localisation et les suivantes reproduisant chacune la séquence préfixe ou sa version complémentée en fonction d'un code identifiant des types de signalisation. Bien entendu, dans le cas où il n'y a qu'un seul type de signalisation à identifier, ces séquences suivantes sont inutiles.

Le message d'acquittement est avantageusement acheminé par une voie de service.

La perte de synchronisation de la hiérarchie des trains numériques lors de l'insertion du message de télésurveillance est évitée en donnant aux parties de caractérisation et de localisation du message de télésurveillance, ainsi qu'au message d'acquittement lorsqu'il n'est pas transmis par une voie de service mais par substitution momentanée à des données d'un train numérique, des longueurs nettement inférieures à celle d'un secteur de la trame de la hiérarchie la plus élevée des trains numériques.

La présente invention a également pour objet un dispositif de mise en oeuvre du procédé précité.

D'autres caractéristiques et avantages de l'invention ressortiront de la description ci-après d'un mode de réalisation donné à titre d'exemple. Cette description sera faite en regard du dessin dans lequel :

- la figure 1 est un schéma reprenant les principaux éléments d'une liaison numérique bidirectionnelle et explicitant les trajets des deux parties d'un message de télésignalisation et du message d'acquittement associé,
- la figure 2 représente schématiquement l'implantation de circuits d'émission de messages de télésignalisation dans un répéteur bidirectionnel de la liaison de la figure précédente,
- la figure 3 représente le schéma électrique d'un circuit d'émission de messages de télésignalisation
- la figure 4 représente schématiquement l'implantation d'un équipement de traitement de message de télésignalisation dans un terminal et
- la figure 5 représente le schéma électrique d'un mode de réalisation de l'équipement de traitement de messages de télésignalisation de la figure 4.

La télésignalisation qui va être décrite s'applique à une liaison de transmission numérique bidirectionnelle comportant deux lignes de transmission distinctes 1, 2 à fibre optique assurant séparément la transmission dans les deux sens à un débit de 295,6 Mbits en utilisant en ligne un code NRZ brouillé avec un élément binaire de parité de type 24 B1P. Les trains numériques acheminés par chaque sens de transmission regroupent chacun, par un multiplexage organisé en trames de 4,736 $\mu$ s subdivisées en sept secteurs, des voies de service à 64 kbits/s et deux trains numériques à 140 Mbits/s résultant d'un multiplexage du quatrième ordre selon une hiérarchie conforme à l'avis G 700 du CCITT.

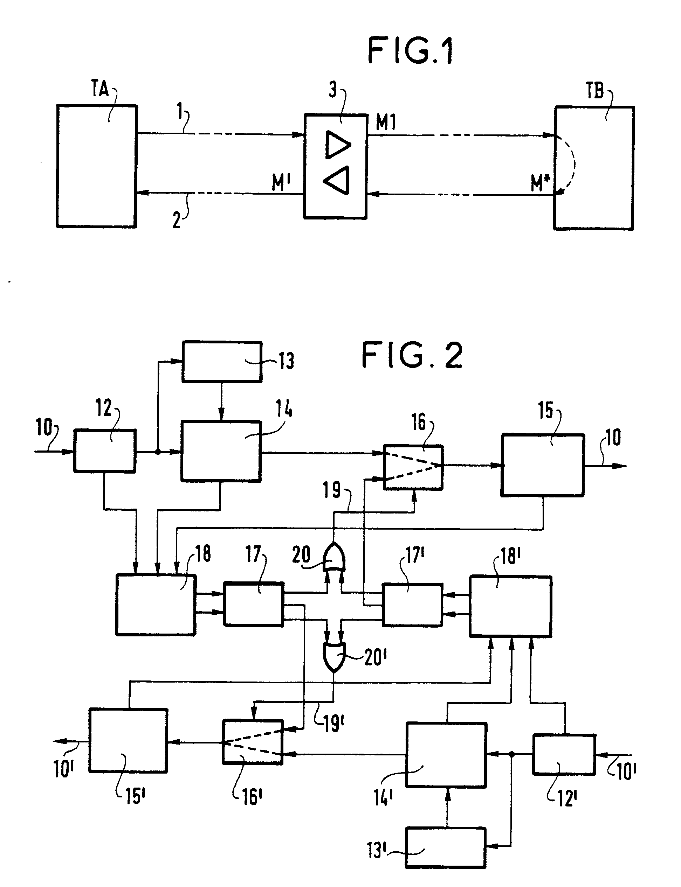

La figure 1 représente de manière très schématique cette liaison avec deux stations terminales TA, TB reliées par deux lignes de transmission parallèles, l'une 1 dite supérieure assurant la transmission dans le sens A vers B et l'autre 2 dite inférieure assurant la transmission dans le sens B vers A qui sont l'une et l'autre équipées de répéteurs régénérateurs intermédiaires tels que 3 assurant de place en place la régénération des trains numériques pour en conserver l'intelligibilité.

Cette liaison est équipée d'une télésurveillance avec dans les répéteurs régénérateurs 3 des circuits de détection d'alarmes et de gestion des alarmes et d'une télésignalisation dont les équipements sont répartis entre les terminaux TA, TB et les répéteurs régénérateurs 3 et permettent de faire parvenir aux terminaux des signalisations d'alarme émises par les répéteurs régénérateurs et de localiser les répéteurs régénérateurs 3 émetteurs de télésignalisation depuis les terminaux TA, TB.

En cas de demande d'émission d'un message de télésignalisation par un circuit de gestion des alarmes d'un répéteur-régénérateur 3, un circuit d'émission de télésignalisation placé dans le répéteur-régénérateur 3 considéré substitue un court instant aux données du train numérique acheminé par la ligne de transmission supérieure 1 dans le sens A vers B, une première partie M1 de message de télésignalisation destinée à la localisation du répéteur régénérateur 3 et, aux données du train numérique acheminé par la ligne de transmission inférieure 2 dans le sens B vers A, une deuxième partie M' de message de télésignalisation destinée à la fois à la localisation et à la caractérisation de la télésignalisation.

La partie M1 parvient au terminal TB avec un temps de retard T2 correspondant au délai nécessaire à la ligne de transmission supérieure 1 pour acheminer le train numérique depuis le répéteur régénérateur émetteur de télésignalisation jusqu'à la station terminal TB, environ 200 $\mu$ s par répéteur-régénérateur rencontré sur le parcours dans le cas du type de liaison pris pour exemple.

Détectée dès réception au terminal TB par un équipement transpondeur la partie M1 du message de télésignalisation provoque l'élaboration d'un message d'acquittement M* qui est inséré au bout d'un temps de traitement $\tau$ dans une voie de service sur la ligne de transmission inférieure 2 à destination du terminal TA.

Le message d'acquittement M* met pour parvenir au terminal TA un temps T2 + T1 correspondant au délai nécessaire à la ligne de transmission 2 pour l'acheminer au sein d'un train numérique d'abord jusqu'au répéteur régénérateur 3 émetteur de la télésignalisation et de là jusqu'au terminal TA. Il parvient à ce dernier après l'émission de la partie M1 au bout d'un délai égal à 2T2 + $\tau$ + T1.

La partie de caractérisation M' envoyée directement au terminal TA sans passer par le relais du terminal TB y parvient au bout d'un délai T1.

Au terminal TA, on reçoit, en cas d'émission d'un message de télésignalisation par un répéteur régénérateur 3, une partie de caractérisation permettant de reconnaître le type de signalisation suivi d'un message d'acquittement M* parvenant avec un retard 2T2 + $\tau$ sur la partie de caractérisation et permettant de localiser le répéteur régénérateur émetteur à partir de son rang compté depuis le terminal TB.

L'absence dans le message de télésignalisation d'une partie d'identification du répéteur régénérateur émetteur diminue de façon très importante le nombre d'informations à coder par les états binaires du message lui-même puisque l'on peut trouver plus de deux cents répéteurs régénérateurs entre deux stations terminales.

Les rôles des terminaux TA et TB dans la télésignalisation peuvent être échangés. En choisissant des parties de caractérisation et de localisation distinctes il est possible de faire jouer aux deux terminaux TA, TB des rôles de terminaux traitant pour certaines signalisations et relais pour d'autres. On prendra de préférence le terminal TA comme terminal traitant et le terminal TB comme terminal relais pour toutes les signalisations intéressant les parties des répéteurs régénérateurs 3 vouées à la ligne de transmission supérieure 1, et le terminal TB comme terminal traitant et le terminal TA comme terminal relais pour toutes les signalisations intéressant les parties des répéteurs régénérateurs vouées à la ligne de transmission inférieure 2.

Dans l'exemple présent, la partie de localisation M1 d'un message de télésignalisation est une configuration binaire unique formée de 75 éléments binaires zéro successifs tandis que la partie de caractérisation M' est une configuration binaire de longueur double commençant par un préfixe correspondant à la partie de localisation complémentée $\overline{M}1$ et se terminant par un suffixe correspondant à la partie de localisation complémentée ou non $\overline{M}1$ ou M1 ce qui permet de transmettre deux types de signalisation.

L'une des configurations de 75 éléments binaires identiques zéro ou un est reconnaissable car elle viole la définition du code 24 B1P. C'est par exemple, dans le cadre d'un bit de parité paire, de valeur zéro pour un nombre pair de uns dans un bloc, la configuration de 75 éléments binaires identiques un. L'autre configuration est, du fait du brouillage, extrêmement peu probable dans les trains numériques. Elles sont toutes deux faciles à engendrer dans les répéteurs régénérateurs avec un minimum de circuits très rapides car il suffit pour cela d'imposer un niveau constant zéro ou un aux entrées de leurs émetteurs pendant une durée de 0,25 $\mu$s.

Le message d'acquittement M* acheminé par une voie de service à 64 Kbits/s présente une configuration spécifique qui lui est réservée dans cette voie de service par exemple celle de l'octet 00010111.

Comme les parties de localisation M1 et de caractérisation M' sont des configurations binaires distinctes, il est possible de doubler le nombre de types de signalisation transmis en attribuant au terminal TA le rôle de terminal traitant pour certains types de signalisations et de terminal relais pour d'autres. Dans l'exemple de réalisation décrit dans la suite, on utilise le terminal TA comme terminal traitant pour toutes les signalisations concernant les équipements des répéteurs régénérateurs affectés à la ligne de transmission supérieure 1 (sens A vers B) et le terminal TB comme terminal traitant pour toutes les signalisations concernant les équipements des répéteurs régénérateurs affectés à la ligne de transmission inférieure 2 (sens B vers A).

La figure 2 représente schématiquement un répéteur régénérateur bidirectionnel équipé de circuits d'émission de message de télésignalisation.

Le répéteur régénérateur prévu pour des lignes de transmission supérieure et inférieure à fibre optique 10, 10' comporte, de manière connue, pour chaque sens de transmission un démodulateur opto-électrique 12, 12' recevant le signal optique à régénérer de la fibre optique 10, 10', des circuits électroniques de remise en forme du signal placés à la suite du démodulateur et constitués essentiellement par un circuit de récupération de cadence bit 13, 13' et par un circuit de régénération 14, 14', et un modulateur optique 15, 15' qui reçoit le signal régénéré sous forme électrique et le réintroduit sous forme optique dans la fibre 10, 10'.

Il est en outre doté de deux aiguillages 16, 16' intercalés en entrée des modulateurs optiques 15, 15' pour permettre l'insertion des parties de message de télésignalisation dans les trains numériques acheminés dans les deux sens, de deux circuits d'émission de télésignalisation 17, 17' contrôlant en commun les deux aiguillages 16, 16', l'un 17 permettant l'insertion dans les trains numériques d'un message de télésignalisation admettant le terminal A comme terminal traitant, l'autre 17' permettant l'insertion dans les trains numériques d'un message de télésignalisation admettant le terminal B comme terminal traitant, et de deux circuits de détection et de gestion des alarmes 18, 18', l'un 18 contrôlant les circuits affectés au sens de transmission A vers B et commandant le circuit d'émission de télésignalisation 17 et l'autre 18' contrôlant les circuits affectés au sens de transmission B vers A et commandant le circuit d'émission de télésignalisation 17'.

Les aiguillages 16, 16' ont une première voie d'entrée reliée à la sortie du circuit de régénération de train numérique 14, 14', une deuxième voie d'entrée reliée à la sortie du circuit d'émission de message de télésignalisation 17, 17', une voie de sortie reliée à l'entrée du modulateur optique 15, 15' et une commande d'adressage 19, 19' adressée à la fois par les deux circuits d'émission de télésignalisation 17, 17' par l'intermédiaire de deux portes logiques de type "ou" 20, 20'.

La première voie d'entrée des aiguillages 16, 16' est sélectionnée par un niveau logique zéro sur leur commande d'adressage 19, 19' et la deuxième par un niveau logique un.

La substitution aux données d'un train numérique d'une partie de localisation d'un message de télésignalisation c'est-à-dire d'une configuration de 75 éléments binaires successifs zéro se fait au moyen de l'aiguillage 16 ou 16' traversé par le train numérique considéré en maintenant sur sa deuxième voie d'entrée un niveau logique constant zéro et en appliquant sur sa commande d'adressage un niveau logique un pendant la durée de 75 éléments binaires successifs soit 0,25 $\mu$ s.

La substitution aux données d'un train numérique d'une partie de caractérisation d'un message de télésignalisation c'est-à-dire d'une configuration de 150 éléments binaires successifs formée d'une première séquence de 75 éléments binaires successifs tous un suivie d'une autre séquence de 75 éléments binaires successifs tous un ou tous zéro se fait toujours au moyen de l'aiguillage 16 ou 16' traversé par le train numérique considéré en lui appliquant sur sa commande d'adressage un niveau logique un pendant la durée de 150 éléments binaires soit 0,5 $\mu$ s et sur sa deuxième voie d'entrée, selon le cas, un niveau logique un maintenu sur la durée de 150 éléments binaires soit 0,5 $\mu$ s ou un niveau logique un maintenu sur la durée de 75 éléments binaires soit 0,25 $\mu$ s puis un niveau logique zéro maintenu sur cette même durée.

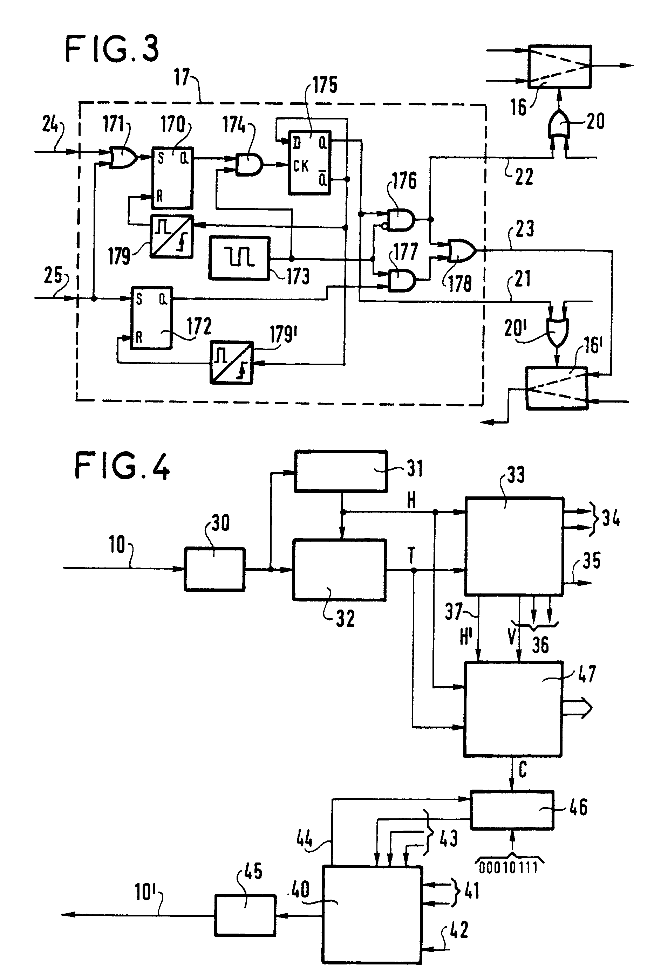

Les ordres nécessaires à la commande des aiguillages pour effectuer ces substitutions sont engendrés par les circuits d'émission de télésignalisation 17, 17'. Un exemple de réalisation de l'un d'entre eux, celui 17 engendrant les messages de télésignalisation admettant le terminal TA comme terminal traitant, est représenté à la figure 3. Celui-ci comporte :

- un circuit d'horloge 173 délivrant un signal d'horloge rectangulaire symétrique de période égale à la durée de la partie de caractérisation d'un message de télésignalisation et de demi-période égale à la durée de la partie de localisation ou d'une séquence préfixe ou suffixe d'une partie de caractérisation d'un message de télésignalisation,
- un circuit de sélection de la première période complète du signal du circuit d'horloge 173 suivant l'émission d'une alarme par le circuit de détection et de gestion des alarmes 18, qui se compose :
  . d'une première bascule de type RS 170 connectée par son entrée S et au moyen d'une porte logique de type "ou" 171 aux deux sorties 24, 25 du circuit de détection et de gestion des alarmes 18,
  . d'une porte logique de type "et" 174 à deux entrées connectées l'une en sortie du circuit d'horloge 173 et l'autre en sortie Q de la première bascule de type RS 170
  . et d'une bascule de type D 175 à déclenchement sur fronts descendants cadencée par le signal de sortie de la porte logique de type "et" 174, montée en diviseur par deux et connectée par sa sortie $\overline{Q}$ à l'entrée R de la première bascule de type RS 170 par l'intermédiaire d'un détecteur de transition positive 179 et par sa sortie Q à la sortie 21 du circuit d'émission de message de télésignalisation contrôlant par l'intermédiaire de la porte logique de type "ou" 20' la commande d'adressage de l'aiguillage 16' intercalé dans le sens B vers A de la liaison,

- un circuit de repérage de la première moitié de la période sélectionnée par le circuit de sélection formé d'une porte logique de type "et" 176 avec deux entrées l'une précédée d'un inverseur connecté à la sortie du circuit d'horloge 173 et l'autre connectée à la sortie Q de la bascule de type D 175, et avec une sortie connectée à la sortie 22 du circuit d'émission de télésignalisation contrôlant par l'intermédiaire de la porte logique de type "ou" 20 la commande d'adressage de l'aiguillage 16 intercalé dans le sens A vers B de la liaison et

- un circuit de composition de la séquence suffixe d'une partie de caractérisation d'un message de télésignalisation formé :

  . d'une deuxième bascule de type RS 172 mémorisant le type d'alarme engendré par le circuit de détection et de gestion des alarmes 18 avec une entrée S connectée à l'une des sorties de ce circuit de détection et de gestion des alarmes 18 et une entrée R connectée à la sortie $\overline{Q}$ de la bascule de type D 175 par l'intermédiaire d'un détecteur de transition positive 179',

  - d'une porte logique de type "et" 177 avec deux entrées connectées l'une à la sortie de la deuxième bascule de type RS 172 et l'autre à la sortie du circuit d'horloge 173 et

  . d'une porte logique de type "ou" 178 réunissant les sorties des portes logiques de type "et" 176, 177 et délivrant le signal de la sortie 23 du circuit d'émission de télésignalisation appliqué sur la deuxième voie d'entrée de l'aiguillage 16' intercalé dans le sens B vers A de la liaison.

Le circuit d'émission de télésignalisation présente deux entrées 24, 25 spécialisées pour chacun des deux types d'alarme que peut engendrer le circuit de détection et de gestion des alarmes 18 qui le commande. Au repos, c'est-à-dire en l'absence d'alarme, ces deux entrées 24, 25 demeurent au niveau logique zéro de même que les sorties Q des trois bascules 170, 172, 175 et les sorties générales 21, 22, 23 qui attaquent les aiguillages 16, 16'. Grâce aux niveaux logiques zéro des sorties générales 21, 22 un répéteur régénérateur a toujours ses aiguillages basculés sur leurs premières voies d'entrée empruntées par les trains numériques lorsque ses deux circuits d'émission de télésignalisation sont au repos. Grâce au niveau logique zéro apparaissant sur la sortie générale 23 d'un circuit d'émission de télésignalisation au repos, l'autre circuit d'émission de télésignalisation peut, comme on le verra ultérieurement engendrer la partie de localisation de son message de télésignalisation.

L'apparition d'un type d'alarme se manifeste par une impulsion de durée inférieure à celle de la partie de caractérisation (0,5 $\mu$ s) d'un message de télésignalisation sur l'une des entrées 24, 25. Cette impulsion déclenche la bascule RS 170 dont la sortie Q passe au niveau logique un en débloquant la porte logique de type "et" 174 et provoquant l'application du signal d'horloge à l'entrée de cadencement de la bascule de type D 175. Elle déclenche ou ne déclenche pas la bascule RS 172 selon l'entrée 25 ou 24 sur laquelle elle se présente, mémorisant ainsi par le niveau de la sortie Q de cette bascule RS 172 le type d'alarme qu'elle représente.

La bascule de type D 175 sélectionne la première période complète du signal d'horloge lui parvenant après le déblocage de la porte logique de type "et" 174 comme durée de la partie de caractérisation d'un message de télésignalisation. Cette sélection se fait par l'apparition d'un niveau logique un sur sa sortie Q utilisé en sortie générale 21 pour commuter l'aiguillage 16' afin de substituer une partie de caractérisation de message de télésignalisation au train numérique parcourant la liaison dans le sens B vers A. En fin de sélection la transition positive apparaissant sur la sortie complémentée $\overline{Q}$ de la bascule de type D 175 provoque la remise à zéro des bascules de type RS 170, 172 et par voie de conséquence le reblocage de la porte logique de type "et" 174 et le maintien au repos de la bascule de type D 175.

La porte logique de type "et" 176 repère la première moitié de la période du signal d'horloge sélectionnée par la bascule de type D 175 par un niveau logique un qui apparaît à sa sortie et qui sert à deux fins : d'une part commuter l'aiguillage 16 afin de substituer au train numérique empruntant la liaison dans le sens A vers B un niveau logique 0 provenant de l'autre circuit d'émission de message de télésignalisation 17' supposé au repos et correspondant aux éléments binaires successifs zéro d'une partie de localisation d'un message de télésignalisation et d'autre part provoquer par son application sur la deuxième voie d'entrée de l'aiguillage 16' la transmission dans le sens B vers A de la liaison d'un niveau logique un correspondant aux éléments binaires successifs un de la séquence préfixe d'une partie de caractérisation d'un message de télésignalisation.

La porte logique de type "et" 177 détermine le niveau logique appliqué sur la deuxième voie d'entrée de l'aiguillage 16' au cours de la deuxième moitié de la période du signal d'horloge sélectionnée par la bascule de type D 175 qui correspond à la période d'émission de la séquence suffixe d'une partie de caractérisation d'un message de télésignalisation. Ce niveau logique un ou zéro est celui de la sortie Q de la bascule de type RS 172 qui mémorise le type d'alarme ayant donné lieu à l'émission du message de télésignalisation et provoque, selon ce type d'alarme, l'émission dans le sens B vers A de la liaison d'une séquence suffixe de partie de caractérisation de message de télésignalisation formée soit d'une suite d'éléments binaires successifs un soit d'une suite d'éléments binaires successifs zéro.

Le circuit d'horloge 173 peut être réalisé soit à l'aide d'un oscillateur libre soit à l'aide de diviseurs opérant à partir du rythme bit récupéré sur l'un des deux trains numériques. Il n'est pas nécessaire qu'il soit synchronisé sur les transitions entre les éléments binaires des trains numériques, le nombre d'éléments binaires successifs un ou zéro constituant les parties d'un message de télésignalisation n'étant pas impératif mais simplement limité par une valeur minimale imposée par les circuits de détection des terminaux et une valeur maximale imposée dans le souci de perturber le moins possible les trains numériques.

Bien entendu, dans chacun des circuits d'aiguillage 16, 16', une bascule d'échantillonnage, non représentée, cadencée par le circuit de récupération de cadence bit 13, 13' assure la synchronisation du signal appliqué à la deuxième voie d'entrée de ce circuit d'aiguillage 16, 16' avec la cadence bit du train numérique correspondant.

On notera que seul un très petit nombre d'éléments ressortent d'une technologie très rapide compatible avec le débit à 295,600 M/bits mais forte consommatrice d'énergie, la quasi totalité des circuits fonctionnant à un débit réduit accessible avec une technologie simplement rapide beaucoup plus économe en énergie.

La figure 4 représente de manière schématique, dans leur environnement les circuits affectés à la télésignalisation dans un terminal. Ce terminal choisi arbitrairement est le terminal TB. Il présente une partie réception et une partie émission classiques entre lesquelles s'insère un équipement de traitement des messages de télésignalisation 47 contrôlant un générateur de message d'acquittement M* 46.

La partie réception présente un démodulateur opto-électronique 30 sur lequel aboutit la fibre optique 10 de la ligne de transmission supérieure acheminant le multiplex entrant sous la forme d'un train numérique à 295,6 Mbits/s, des circuits électroniques de remise en forme du signal constitués principalement par un circuit de récupération de cadence bit 31 et par un circuit de régénération 32, et un équipement de décodage, débrouillage et démultiplexage 33 qui reçoit en entrée le train numérique à 295,6 Mbits/s T délivré par le circuit de régénération 32 et sa cadence bit récupérée H et décompose le multiplex entrant en ses composantes c'est-à-dire deux trains numériques à 140 Mbits/s qu'il délivre sur ses sorties 34 avec leur signal d'horloge disponible sur une sortie 35, et des voies de service à 64 kbits/s qu'il délivre sur des sortie 36 avec leur signal d'horloge H' disponible sur une sortie 37.

La partie émission présente un équipement de multiplexage, brouillage et codage 40 qui délivre un train numérique à 295,6 Mbits s à émettre en ligne provenant du brouillage et du codage d'un multiplex sortant réalisé à partir de deux trains numériques à 140 Mbits/s appliqués sur des entrées 41 et de leur signal de rythme appliqué sur une entrée 42, ainsi qu'à partir de voies de service à 64 kbits/s qui sont appliquées sur des entrées 43 auxquelles il fournit un signal de rythme disponible sur une sortie 44. Cet équipement de multiplexage, brouillage et codage 40 est suivi d'un émetteur optique 45 qui reçoit le train numérique à 295,6 Mbits/s sous forme électrique et l'introduit sous forme optique dans la fibre optique 10' de la ligne de transmission inférieure.

Ces parties émission et réception ne seront pas détaillées car elles sont bien connues de l'homme de métier et sortent du cadre de la présente invention.

L'une des voies de service du multiplex entrant repérée par V sur les sorties 36 de l'équipement de décodage, débrouillage et démultiplexage est réservée à la transmission du terminal TA vers le terminal TB des messages d'acquittement.

L'une des voies de service du multiplex sortant est réservée à la transmission des messages d'acquittement du terminal TB vers le terminal TA. Son accès parmi les entrées 43 de l'équipement de multiplexage brouillage et codage 40 est connecté à la sortie série de données d'un registre à décalage à huit étages constituant le générateur de message d'acquittement M* 46. Ce registre à décalage a une entrée série non représentée mise au niveau logique 0, une entrée parallèle câblée aux niveaux logiques 00010111 correspondant à l'octet de définition d'un message d'acquittement, une entrée d'horloge connectée à la sortie de signal d'horloge de voie 44 de l'équipement de multiplexage, brouillage et codage 40, et une entrée de commande de chargement parallèle contrôlée par un signal C engendré par l'équipement de traitement de messages de télésignalisation.

L'équipement de traitement de messages de télésignalisation 47 reçoit de la partie réception d'une part le train numérique T à 295,6 Mbits/s du multiplex entrant et sa cadence bit H pour détecter dans celui-ci les séquences d'éléments binaires successifs un ou zéro composant les parties de message de télésignalisation et d'autre part la voie de service entrante V et son signal d'horloge H' pour détecter les messages d'acquittement.

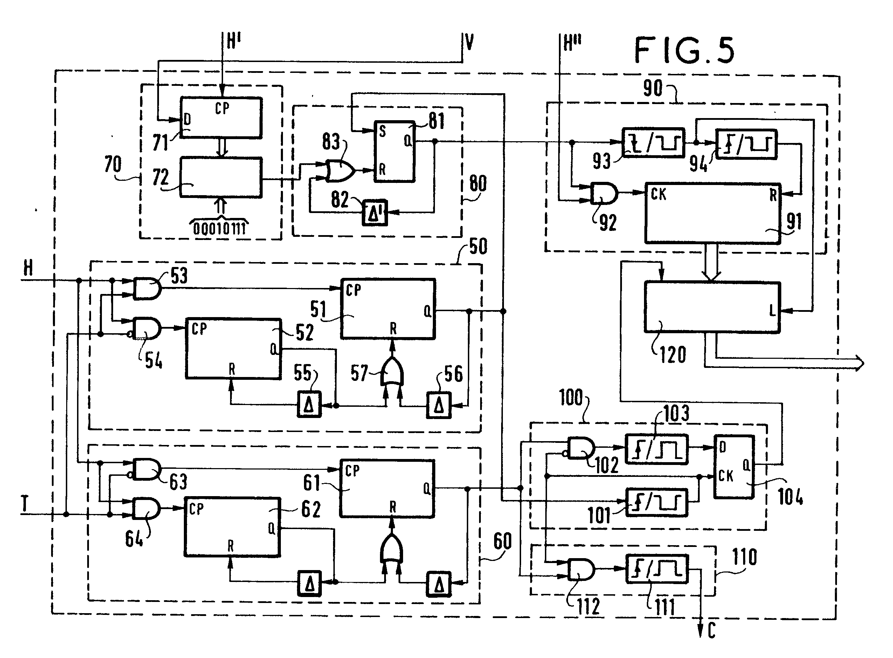

Il engendre le signal C de contrôle du générateur de message d'acquittement M* pour les messages de télésignalisation ayant le terminal TB comme terminal relais et fournit les informations relatives aux messages de télésignalisation ayant le terminal TB comme terminal traitant c'est-à-dire leur type et l'identification de leur émetteur. Sa constitution est détaillée à la figure 5. Il comporte essentiellement :

- un circuit de détection 50 des suites d'éléments binaires successifs un constituant les séquences préfixe ou suffixe des parties de caractérisation de messages de télésignalisation,
- un circuit de détection 60 des suites d'éléments binaires successifs zéro constituant les parties de localisation de messages de télésignalisation ou les séquences suffixe des parties de caractérisation de messages de télésignalisation,
- un circuit de détection de message d'acquittement 70,
- un circuit de repérage de délai 80 qui est déclenché par le circuit de détection des suites d'éléments binaires successifs un 50 et remis au repos par le circuit de détection de message d'acquittement 70 et qui repère le délai s'écoulant entre les réceptions d'une partie de caractérisation et d'un message d'acquittement,
- un circuit de chronométrage 90 mesurant la durée du créneau émis par le circuit de repérage de délai 80,
- un circuit d'identification 100 de type de message de télésignalisation qui opère par échantillonnage de la sortie du circuit de détection 60 des suites d'éléments binaires successifs zéro après chaque déclenchement du circuit de repérage de délai 80,
- un circuit de commande 110 du générateur de message d'acquittement activé par le circuit de détection 60 des suites d'éléments binaires successifs zéro en l'absence de déclenchement du circuit de repérage de délai 80 et
- un mémoire d'échantillonnage 120 qui reçoit les signaux de sortie du circuit d'identification de type de message de télésignalisation 100 et du circuit de chronométrage 90 et qui est inscrite après chaque créneau engendré par le circuit de repérage de délai 80.

Le circuit de détection 50 des suites d'éléments binaires successifs un engendre une impulsion positive chaque fois qu'il reconnaît dans le train numérique T un motif présentant moins de trois éléments binaires zéro parmi soixante quinze éléments binaires successifs et pouvant constituer une séquence préfixe ou suffixe de type $\overline{M1}$ d'une partie de caractérisation d'un message de télésignalisation. Il comporte un compteur par soixante treize 51 qui compte les éléments binaires du train numérique T au niveau logique un et qui engendre une impulsion positive en sortie du détecteur 50 à chaque débordement. Ce compteur par soixante treize 51 est remis à zéro par un compteur par trois 52 qui compte les éléments binaires du train numérique au niveau logique zéro et qui engendre en sortie une impulsion positive à chaque débordement. Le comptage des éléments binaires du train numérique T au niveau logique un se fait par l'intermédiaire d'une porte logique de type "et" 53 à deux entrées recevant l'une la cadence bit récupérée H, l'autre le train numérique T et ne transmettant à l'entrée de comptage du compteur par soixante treize 51 que les périodes de la cadence bit récupérée H coïncidant avec un élément binaire du train numérique au niveau logique un. Le comptage des éléments binaires du train numérique au niveau logique zéro se fait par l'intermédiaire d'une porte logique de type "et" 54 à deux entrées l'une recevant la cadence bit récupérée H et l'autre le train numérique T inversé au préalable par un inverseur et ne transmettant à l'entrée de comptage du compteur par trois 52 que les périodes de la cadence bit récupérée H coïncidant avec un élément binaire du train numérique T au niveau logique zéro. Chaque compteur 51, 52 est remis systématiquement à zéro après chaque débordement au moyen d'un circuit à retard 55, 56 rebouclant sa sortie de débordement sur son entrée de remise à zéro directement pour le compteur 52 et par l'intermédiaire d'une porte logique de type "ou" 57 pour le compteur 51.

Le circuit de détection 60 des suites d'éléments binaires successifs zéro engendre une impulsion positive à chaque fois qu'il reconnaît dans le train numérique T un motif présentant moins de trois éléments binaires un parmi soixante quinze éléments binaires successifs et pouvant constituer soit une partie de localisation de message de télésignalisation soit une séquence suffixe de type M1 d'une partie de caractérisation d'un message de télésignalisation. Sa structure est analogue à celle du circuit de détection 50 des suites d'éléments binaires successifs un à l'exception de la porte logique de type "et" 63 qui contrôle l'entrée de comptage du compteur par soixante treize 61 et dont l'une des entrées reçoit la cadence bit récupérée H et l'autre le train numérique T inversé au préalable par un inverseur, et à l'exception de la porte logique de type "et" 64 qui contrôle l'entrée de comptage du compteur par trois 62 et dont les deux entrées reçoivent l'une la cadence bit récupérée H et l'autre le train numérique T.

Le circuit de détection de message d'acquittement 70 engendre une impulsion positive à chaque fois qu'il reconnaît l'octet 00010111 de définition d'un message d'acquittement. Il est réalisé à l'aide d'un registre à décalage 71 à huit étages, entrée de donnée série et sortie de donnée parallèle, qui reçoit sur son entrée de donnée série le signal V de la voie de service du multiplex entrant réservée à la transmission vers le terminal B des messages d'acquittement et sur son entrée d'horloge le signal d'horloge H' associé aux voies de service du multiplex entrant, et à l'aide d'un comparateur 72 de deux nombres binaires de huit chiffres ayant une entrée câblée aux niveaux logiques 00010111 et l'autre connectée à la sortie de donnée parallèle du registre à décalage 71.

Le circuit de repérage de délai 80 est formé d'une bascule de type RS 81 dont l'entrée de remise à un est connectée à la sortie du circuit de détection 50 des suites d'éléments binaires successifs un et dont l'entrée R de remise à zéro est connectée à la sortie du circuit de détection de message d'acquittement 70. Le circuit de détection 50 fait passer la sortie de cette bascule de type RS 81 au niveau logique un chaque fois qu'il détecte dans le train numérique T une suite de soixante treize éléments binaires un séparés par moins de trois éléments binaires zéro pouvant constituer une séquence préfixe ou suffixe de type $\overline{M1}$ d'une partie de caractérisation d'un message de télésignalisation tandis que le circuit de détection 70 remet la sortie de cette bascule de type RS 81 au niveau logique zéro à chaque détection d'un message d'acquittement. Un circuit à retard 82 avec un délai Δ ' supérieur au délai maximal mis par un message d'acquittement pour parvenir au terminal TB après une partie de caractérisation d'un message de télésignalisation reboucle la sortie de la bascule de type RS 81 à son entrée R par l'intermédiaire d'une porte logique de type "ou" 83 et provoque une remise à zéro systématique de la bascule de type RS 81 en cas de faux déclenchement.

Le circuit d'identification 100 de type de message de télésignalisation identifie le type M1 ou $\overline{M1}$ de la séquence suffixe d'une partie de caractérisation d'un message de télésignalisation en mémorisant une éventuelle impulsion positive engendrée par le circuit de détection 60 des suites d'éléments binaires successifs zéro sur une certaine période de temps après chaque émission d'une impulsion positive par le circuit de détection 50 des suites d'éléments binaires successifs un. Il est formé :

- d'un monostable 101 qui est déclenché par les transitions positives du signal de sortie du circuit de détection 50 des suites d'éléments binaires successifs un et qui engendre une impulsion négative de 420 ns constituant une fenêtre d'échantillonnage définissant la période de temps pendant laquelle est mémorisée une impulsion éventuelle en sortie du circuit de détection 60 des suites d'éléments binaires successifs zéro,

- d'une porte d'échantillonnage formée d'une porte logique de type "et" 102 à deux entrées l'une précédée d'un inverseur et connectée en sortie du monostable 101 et l'autre connectée directement en sortie du circuit de détection 60 des suites d'éléments binaires successifs zéro,

- d'un monostable 103 qui est déclenché par les fronts montants du signal délivré par la porte d'échantillonnage 102 et engendre une impulsion positive de 200 ns attestant de la reconnaissance d'une séquence suffixe de type M1 d'une partie de caractérisation d'un message de télésignalisation et

- d'une bascule de type D 104 à déclenchement sur front montant, recevant sur son entrée d'horloge l'impulsion négative du monostable 101 constituant la fenêtre d'échantillonnage et sur son entrée donnée l'impulsion positive éventuelle du monostable 103 caractéristique de la reconnaissance d'une partie suffixe de type M1.

Le circuit de commande 110 du générateur de message d'acquittement fonctionne en cas de réception d'une partie de localisation de message de télésignalisation c'est-à-dire en cas de réception d'une suite d'éléments binaires successifs zéro ne succédant pas à une suite d'éléments binaires successifs un. Il est formé d'un monostable 111 qui engendre une impulsion positive et qui est déclenché par les fronts montants du signal de sortie du circuit de détection 60 des suites d'éléments binaires successifs zéro en l'absence de déclenchement préalable du circuit de détection 50 des suites d'éléments binaires successifs un grâce à une porte logique de type "et" 112 à deux entrées connectées l'une en sortie du monostable 101 du circuit d'identification 100, l'autre en sortie du circuit de détection 60.

Le circuit de chronométrage 90 mesure la durée du créneau positif engendré par le circuit de repérage de délai 80. Il comporte un compteur 91 qui compte les périodes d'un signal d'horloge H" s'écoulant pendant chaque créneau positif engendré par le circuit de repérage de délai 80. La sélection des périodes du signal d'horloge H" coïncidant avec un créneau positif du circuit de repérage de délai 80 se fait au moyen d'une porte logique de type "et" 92 à deux entrées qui reçoivent l'une le signal d'horloge H" et l'autre le signal de sortie du circuit de repérage de délai 80. Un premier monostable 93 déclenché par les fronts descendants des créneaux positifs délivrés par le circuit de repérage de délai 80 engendre une impulsion négative durant 1 $\mu$ s utilisée pour commander l'écriture de la mémoire d'échantillonnage 120 à la fin de chacun de ces créneaux. Un deuxième monostable 94 placé à la suite du premier et déclenché par les fronts montants des impulsions négatives d'écriture délivrées par ce dernier engendre des impulsions négatives de 1 $\mu$ s utilisées pour la remise à zéro du compteur 91 à la fin de chaque créneau positif engendré par le circuit de repérage de délai 80 et après l'inscription de son contenu dans la mémoire d'échantillonnage 120.

La mémoire d'échantillonnage 120 est inscrite après chaque créneau positif engendré par le circuit de repérage de délai 80 d'une part avec le contenu du registre de type D 104 du circuit d'identification 100 qui correspond au type de message de télésignalisation, un niveau logique 0 correspondant à un message de télésignalisation ayant une partie de caractérisation avec une séquence suffixe du type $\overline{M1}$ et un niveau logique 1 à un message de télésignalisation ayant une partie de caractérisation avec une séquence suffixe de type M1, et d'autre part avec le contenu du compteur 91 qui mesure la durée séparant au terminal TB la réception d'une partie de caractérisation d'un message de télésignalisation de celle d'un message d'acquittement, durée qui permet de repérer le rang du récepteur régénérateur émetteur par rapport au terminal TA et par conséquent de l'identifier.

On retrouve dans l'équipement de traitement de message de télésignalisation un certain nombre de circuits fonctionnant à grand débit nécessitant une technologie très rapide grande consommatrice d'énergie. Mais cela est sans importance car l'exploitation de la télésignalisation ne se fait sur une liaison numérique que dans un petit nombre d'équipements en général non téléalimentés.

**Revendications**

1.  Procédé de télésignalisation le long d'une liaison de transmission numérique bidirectionnelle reliant deux terminaux distants, à partir d'équipements répartis le long de la liaison et à destination de l'un des terminaux dit terminal traitant, l'autre étant dit terminal relais, à l'aide de messages numériques de mêmes débits que les trains numériques acheminés par la liaison aux données desquels ils sont momentanément substitués, chaque message de télésignalisation étant formé de deux parties, une première partie dite de caractérisation envoyée en direction du terminal traitant, et une deuxième partie dite de localisation envoyée en direction du terminal relais qui émet en réponse à destination du terminal traitant un message d'acquittement reçu au terminal traitant avec un retard par rapport a la partie caractérisation du message de télésignalisation identifiant la position le long de la liaison de l'équipement émetteur du message de télésignalisation, et la partie de caractérisation d'un message de télésignalisation étant constituée de plusieurs configurations binaires commençant toutes par une séquence préfixe invariante et se poursuivant par une séquence suffixe particulière à chaque type de message, caractérisé en ce que la partie de caractérisation d'un message de télésignalisation est constituée de l'une ou l'autre selon le type de message, de deux configurations binaires distinctes ayant une séquence préfixe obtenue par complémentation de la configuration binaire adoptée pour la partie de localisation d'un message de télésignalisation et une séquence suffixe identique à la séquence préfixe pour l'une des configurations et à la séquence préfixe complémentée pour l'autre des configurations.

2.  Procédé selon la revendication 1, caractérisé en ce que le message d'acquittement est envoyé par le terminal relais au terminal traitant par une voie de service.

3.  Dispositif de mise en oeuvre du procédé selon la revendication 1 sur une liaison numérique bidirectionnelle reliant deux terminaux distants (TA, TB) et ayant au moins un équipement intermédiaire (3) pourvu d'un circuit de détection et de gestion des alarmes (18) engendrant deux types d'alarme et de deux circuits d'aiguillage (16, 16'), un par sens de transmission, permettant de substituer aux trains numériques transmis les parties de localisation et de caractérisation de message de télésignalisation, caractérisé en ce qu'il comporte au moins un circuit d'émission de message de télésignalisation (17) qui est placé dans ledit équipement intermédiaire pour commander les circuits d'aiguillage (16, 16') sous le contrôle du circuit de détection et de gestion des alarmes (18) et qui est pourvu :
    - d'un circuit d'horloge (173) délivrant un signal d'horloge de période égale a la durée d'une partie de caractérisation d'un message de télésignalisation et de demi-période égale aux durées de la partie de localisation d'un message de télésignalisation ou d'une séquence suffixe ou préfixe d'une partie de caractérisation d'un message de télésignalisation,

- d'un circuit de sélection (170, 171, 174, 175) de la première période complète du signal engendré par le circuit d'horloge (173) après l'émission d'une alarme par le circuit de détection et de gestion des alarmes (18), ledit circuit de sélection commandant le basculement d'un premier circuit d'aiguillage (16') pour remplacer des données du train numérique de l'un des sens de la liaison par une partie de caractérisation de message de télésignalisation,
- d'un circuit de repérage (176) de la première moitié de la période sélectionnée par le circuit de sélection (170, 171, 174, 175) qui commande pendant cette première moitié de période d'une part le basculement du deuxième circuit d'aiguillage (16) pour remplacer des données du train numérique de l'autre sens de la liaison par une partie de localisation de message de télésignalisation constituée d'un premier niveau logique constant et d'autre part l'application à l'entrée en service du premier circuit d'aiguillage (16') d'un deuxième niveau logique constant correspondant à la séquence préfixe d'une partie de caractérisation de message de télésignalisation,
- et d'un circuit de composition (172, 177, 178) de séquence suffixe de partie de caractérisation de message de télésignalisation mémorisant le type d'alarme émis par le circuit de détection et de gestion des alarmes (18) et appliquant à l'entrée en service du premier circuit d'aiguillage (16') pendant la durée d'une séquence suffixe, un niveau logique constant fonction du type d'alarme.

4. Dispositif selon la revendication 3, caractérisé en ce qu'il comporte dans l'un au moins des terminaux de la liaison un générateur de message d'acquittement (46) capable d'insérer dans le train numérique sortant des messages d'acquittement et un équipement de traitement de messages de télésignalisation (47) pourvu :

- d'un circuit de détection (50) dans le train numérique entrant des suites d'éléments binaires successifs au deuxième niveau logique correspondant à une séquence préfixe ou suffixe d'une partie de caractérisation de message de télésignalisation,
- d'un circuit de détection (60) dans le train numérique entrant des suites d'éléments binaires successifs au premier niveau logique correspondant à une partie de localisation ou à une séquence suffixe d'une partie de caractérisation d'un message de télésignalisation,
- d'un circuit de détection (70) d'un message d'acquittement parvenant par le train numérique entrant,
- d'un circuit de repérage de délai (80) qui est déclenché par le circuit de détection (50) des suites d'éléments binaires successifs au deuxième niveau logique et remis à zéro par le détecteur de message d'acquittement (70),
- d'un circuit de chronométrage (90) mesurant la durée du créneau engendré par le circuit de repérage de délai (80),
- d'un circuit d'identification (100) de type de message de télésignalisation opérant par échantillonnage de la sortie de l'un des circuits de détection (50. 60) des éléments binaires successifs à un même premier ou deuxième niveau logique après chaque déclenchement du circuit de repérage de délai (80),
- d'un circuit de commande (110) du générateur de message d'acquittement (46) activé par le circuit de détection (60) des suites d'éléments binaires successifs au premier niveau logique en l'absence de déclenchement du circuit de repérage de délai (80) et
- d'une mémoire d'échantillonnage (120) inscrite après chaque créneau engendré par le circuit de repérage de délai (80) avec les signaux de sortie du circuit de chronométrage (90) et du circuit d'identification (100).

**Claims**

1. A method of remote signalling between equipments distributed along a bidirectional digital transmission link and two remote terminals of the link, the signalling being intended for one of the terminals, so-called processing terminal whereas the other is a so-called relay terminal, by means of digital messages having the same data rate as the digital bit streams conveyed by the link, and replacing temporarily the data thereof, each signalling message being composed of two parts, one part referred to as characterizing part sent to the processing terminal and a second part referred to as localizing part sent to the relay terminal which responds thereto by sending to the processing terminal an acknowledgement message received at the processing terminal with a time-delay relative to the characterizing part of the signalling message and identifying the position along the link of the equipment sending the remote signalling message, the characterizing part of a remote signalling message being constituted of a number of binary patterns all beginning with an invariant prefix sequence and continuing with a suffix sequence specific for each type of message, characterized in that the characterizing part of a remote signalling message is constituted of one or the other of two distinct binary patterns depending upon the type of message which patterns have a prefix sequence obtained by forming the binary complement adopted for the localizing part of the remote signalling message, and a suffix sequence identical with the prefix sequence as to the first one of said patterns, and with the complemented prefix sequence as to the other one of said patterns.

2. A method according to claim 1, characterized in that the acknowledgement message is sent by the relay terminal to the operating terminal.

3. A device for implementing the method according to claim 1 on a bidirectional digital link between two mutually remote terminals (TA, TB) and having at least one intermediate equipment (3) provided with an alarm detection and management circuit (18), generating two types of alarm and two switching circuits (16, 16'), one for each transmission direction, for substituting for the transmitted digital bit streams the localizing and characterizing parts of the remote signalling message, said device comprising at least one remote signalling message transmission circuit (17) in said intermediate equipment for controlling the switching circuits (16, 16') under the control of the alarm detection and management circuit (18) and including:
   - a clock circuit (173) delivering a clock signal the period of which is equal to the duration of a characterizing part of a remote signalling message and the half-periode of which is equal to the duration of the localization part of the signalling message or of a suffix or prefix sequence of a characterizing part of a remote signalling message,
   - a circuit (170, 171, 174, 175) for selecting the first complete period of the signal generated by the clock circuit (173) after the transmission of an alarm by the alarm detection and management circuit (18) , said detection circuit controlling the switching of a first switching circuit (16') for replacing the data of the digital bit stream in one link direction by a remote signalling message characterizing part,
   - a circuit (176) for marking the first half of the period selected by the selection circuit (170, 171, 174, 175) which controls during this first half-period the second switching circuit (16) for replacing the data of the digital bit stream in the other link direction by a remote signalling message localizing part consisting of a constant first logic level, and which controls the application to the input in service of the first switching circuit (16') of a second constant logic level corresponding to the prefix sequence of a remote signalling message characterizing part, and
   - a circuit (172, 177, 178) for composing the suffix sequence of the remote signalling message characterizing part which suffix stores the type of alarm sent by the alarm detection and management circuit (18) and applies a constant logic level dependent on the type of alarm to the input in service of the first switching circuit (16') during the duration of a suffix sequence.

4. A device according to claim 3, characterized in that it comprises in at least one of the link terminals an acknowledgement message generator (46) able to insert acknowledgement messages into the outgoing digital bit stream and a remote signalling message processing equipment (47) comprising:
   - a circuit (50) for detecting in the incoming digital bit stream consecutive bits at the second logic level corresponding to a prefix or suffix sequence of a remote signalling message characterizing part,
   - a circuit (60) for detecting in the incoming digital bit stream consecutive bits at the first logic level corresponding to a localizing part or to a suffix sequence of a characterizing part of a remote signalling message,
   - a circuit (70) for detecting an acknowledgement message arriving in the incoming digital bit stream,
   - a delay marker circuit (80) triggered by the circuit (50) for detecting sequences of consecutive bits at the second logic level and reset to zero by the acknowledgement message detector (70),
- a timer circuit (90) for measuring the duration of the pulse generated by the delay marker circuit (80),
- a circuit (100) for identifying the type of remote signalling message by sampling the output of one of the circuits (50, 60) for detecting consecutive bits at a first or second logic level after each triggering of the delay marker circuit (80),
- a circuit (110) for controlling the acknowledgement message generator (46) activated by the circuit (60) for detecting sequences of consecutive bits at the first logic level in the absence of the delay marker circuit (80) triggering, and
- a sampling memory (120) in which after each pulse generated by the delay marker circuit (80) the output signals of the timer circuit (90) and the identification circuit (100) are inscribed.

## Ansprüche

1. Verfahren zur Fernsignalisierung entlang einer digitalen bidirektionalen Übertragungsstrecke, die zwei voneinander entfernte Endstationen verbindet, wobei die Meldung von entlang der Strecke verteilten Anlagen aus erfolgt und an eine der Endstationen, Bearbeitungsendstation genannt, gerichtet ist, während die andere Endstation Relaisstation genannt wird, wobei die Meldung durch eine digitale Nachricht mit den gleichen Durchsatzraten übertragen wird wie die von der Strecke beförderten Datenströme, die sie vorübergehend ersetzt, wobei jede Fernsignalnachricht aus zwei Teilen besteht, nämlich einem ersten Teil zur Kennzeichnung, der in Richtung auf die Bearbeitungsendstation ausgesandt wird, und einem zweiten Teil zur Lokalisierung, der in Richtung auf die Relaisendstation ausgesandt wird, die als Antwort an die Behandlungsendstation eine Bestätigungsmeldung aussendet, die bei letzterer mit Zeitverzögerung relativ zum Kennzeichnungsteil empfangen wird und die Position der die Fernsignalnachricht aussendenden Station entlang der Strecke identifiziert, und wobei der Kennzeichnungsteil einer Fernsignalnachricht aus mehreren binären Konfigurationen besteht, die alle mit einem invarianten Vorspann beginnen und sich in einer für jede Nachrichtenart besonderen Nachspannfolge fortsetzen, dadurch gekennzeichnet, daß der Kennzeichnungsteil einer Fernsignalnachricht je nach der Nachrichtenart aus einer von zwei unterschiedlichen binären Konfigurationen besteht, die aus dem Komplementbild der binären, für den Lokalisierungsteil der Fernsignalnachricht adoptierten Folge als Vorspann, sowie aus einer Nachspannfolge gebildet wird, die für die eine der Konfigurationen mit der Vorspannfolge und für die andere der beiden Konfigurationen mit der komplementären Vorspannfolge übereinstimmt.

2. Verfahren nach Anspruch 1, dadurch gekennzeichnet, daß die Bestätigungsmeldung von der Relaisendstation über einen Dienstkanal an die Behandlungsendstation gesendet wird.

3. Einrichtung zur Durchführung des Verfahrens nach Anspruch 1, für eine digitale bidirektionale Übertragungsstrecke, die zwei voneinander entfernte Endstationen (TA, TB) miteinander verbindet und mindestens eine dazwischen liegende Anlage (3) besitzt, die mit einen Erfassungs- und Alarmverarbeitungskreis (18), der zwei Arten von Alarm auslöst, sowie zwei Weichenkreise (16, 16') aufweist, jeweils einen für eine Übertragungsrichtung, die das Ersetzen der übertragenen digitalen Datenströme durch die Lokalisierungs- und Kennzeichnungsteile der Fernsignalnachricht erlauben, dadurch gekennzeichnet, daß die Einrichtung mindestens einen Sendekreis (17) zum Aussenden der Fernsignalnachricht aufweist, der in der dazwischen liegenden Anlage zur Steuerung der Weichenkreise (16, 16') unter der Kontrolle durch den Erfassungs- und Alarmverarbeitungskreis (18) liegt und aufweist
- einen Taktkreis (173), der ein Taktsigal mit einer Periode liefert, die der Dauer eines Kennzeichnungsteils einer Fernsignalnachricht entspricht sowie der zweifachen Dauer des Lokalisierungsteils einer Fernsignalnachricht oder einer Nachspann-oder Vorspannfolge eines Kennzeichnungsteils einer Fernsignalnachricht entspricht,
- einen Auswahlkreis (170, 171, 174, 175) für die erste volle Periode des vom Taktkreis (173) nach Ausgabe eines Alarms durch den Erfassungs- und Alarmverarbeitungskreis (18) erzeugten Signals, wobei der Auswahlkreis das Kippen eines ersten Weichenkreises (16') steuert, und die Daten des digitalen Stroms einer der Richtungen der Strecke durch einen Kennzeichnungsteil der Fernsignalnachricht zu ersetzen,
- einen Auffindungskreis (176) zum Finden der ersten Hälfte der vom Auswahlkreis (170, 171, 174, 175) gewählten Periode, der während dieser ersten Periodenhälfte einerseits das Krippen des zweiten Weichenkreises (16) zum Ersetzen der Daten des digitalen Stroms in der anderen Richtung der Strecke durch ein Lokalisierungsteil der Fernsignalnachricht, der aus einem ersten konstanten Logikpegel besteht, und andererseits das Anlegen eines zweiten konstanten Logikpegels entsprechend der Vorspannfolge eines Kennzeichnungsteils der Fernsignalnachricht an den ausgewählten Eingang des ersten Weichenkreises (16') bewirkt,

- und einen Kompositionskreis (172, 177, 178) zum Zusammensetzen der Nachspannfolge des Kennzeichnungsteils der Fernsignalnachricht, die die vom Erfassungs- und Alarmverarbeitungskreis (18) ausgesandte Alarmart speichert und an den ausgewählten Eingang des ersten Weichenkreises (16') während der Dauer einer Nachspannfolge einen konstanten Logikpegel anlegt, der die Alarmart angibt.

4. Einrichtung nach Anspruch 3, dadurch gekennzeichnet, daß sie in mindestens einer der Endstationen der Strecke einen Nachrichtenbestätigungsgenerator (46), der in den ausgehenden digitalen Strom Bestätigungsnachrichten einfügen kann, und eine Einrichtung (47) zur Behandlung von Fernsignalnachrichten aufweist, die aufweist

- einen Erfassungskreis (50) zur Ermittlung der auf den zweiten Logikpegel lautenden Binärelementfolgen im eingehenden digitalen Strom, welche einer Vorspannoder Nachspannfolge eines Kennzeichnungsteils der Fernsignalnachricht entsprechen,
- einen Erfassungskreis (60) zur Ermittlung der auf den ersten Logikpegel lautenden Binärelementfolgen im eingehenden digitalen Strom, die einem Lokalisierungsteil oder einer Nachspannfolge eines Kennzeichnungsteils einer Fernsignalnachricht entsprechen,
- einen Erfassungskreis (70) für eine durch den eingehenden digitalen Strom mitgebrachte Bestätigungsmeldung,
- einen Zeitverzögerungs-Ermittlungskreis (80), der durch den Erfassungskreis (50) zur Ermittlung der auf den zweiten Logikpegel lautenden Binärelementgruppen ausgelöst und durch den Erfassungskreis (70) für die Bestätigungsmeldung auf Null rückgestellt wird,
- einen Zeitmeßkreis (90) zum Messen der Dauer eines vom Zeitverzögerungs-Ermittlungskreis (80) erzeugten Rechteckimpulses,

- einen Identifizierungskreis (100) zur Feststellung der Art der Fernsignalnachricht, der nach jedem Auslösen des Zeitverzögerungs-Erfassungskreises (80) den Ausgang eines der Erfassungskreise (50, 60) auf das Vorliegen des stets gleichen ersten oder zweiten Logikpegels abtastet,
- einen Steuerkreis (110) für den Nachrichtbestätigungsgenerator (46), der bei fehlender Auslösung des Zeitverzögerungs-Ermittlungskreises (80) durch den Erfassungskreis (60) zur Ermittlung der auf den ersten Logikpegel lautenden Binärelementfolgen aktiviert wird, und
- einen Abtastungsspeicher (120), der nach jedem vom Zeitverzögerungs-Ermittlungskreis (80) erzeugten Rechteckimpuls die Ausgangssignale des Zeitmeßkreises (90) und des Identifizierungskreises (100) abspeichert.

# FIG.1

# FIG. 2

# FIG.3

# FIG.4

FIG.5